**Europäisches Patentamt**

**European Patent Office**

**Office européen des brevets**

(19)

(11) Publication number : **0 376 664 B1**

(12)
# EUROPEAN PATENT SPECIFICATION

(45) Date of publication of patent specification :
**17.02.93 Bulletin 93/07**

(51) Int. Cl.⁵ : **C03C 25/02**

(21) Application number : **89313550.9**

(22) Date of filing : **22.12.89**

(54) Method for manufacturing colored glass cloth.

(30) Priority : **28.12.88 JP 331823/88**

(43) Date of publication of application :
**04.07.90 Bulletin 90/27**

(45) Publication of the grant of the patent :
**17.02.93 Bulletin 93/07**

(84) Designated Contracting States :
**DE GB IT**

(56) References cited :
**EP-A- 0 197 502**
**GB-A- 1 288 405**

(73) Proprietor : **NITTO BOSEKI CO., LTD.**
**1, Aza Higashi Gonome**
**Fukushima-shi Fukushima (JP)**

(72) Inventor : **Kawaguchi, Yutaka**
**35-147, Hourai-cho**
**Fukushima-shi Fukushima (JP)**
Inventor : **Suzuki, Mieko**
**7-6, Sakato**
**Fukushima-shi Fukushima (JP)**
Inventor : **Miyasato, Keita**
**2-7 Aza Hino Toyano**
**Fukushima-shi Fukushima (JP)**

(74) Representative : **Pearce, Anthony Richmond et al**
**MARKS & CLERK Alpha Tower Suffolk Street**
**Queensway Birmingham B1 1TT (GB)**

EP 0 376 664 B1

## Description

### FIELD OF THE INVENTION

The present invention relates to a method for manufacturing a colored glass cloth in which a glass cloth is immersed in and colored with a pigment dispersion.

### BACKGROUND OF THE INVENTION

Conventional glass cloths for IC are manufactured by the steps of conducting a de-sizing treatment for removing a sizing agent attached to the surface of a woven glass cloth or a size for warping; applying a surface treating agent onto the surfaces of glass fibers; after drying, usually immersing the dried glass cloth in a green pigment dispersion; squeezing an excess of the dispersion so as to keep the amount of the dispersion attached at a predetermined value; and then drying it to give a product.

A glass cloth for IC substrates is required to have quick impregnation properties for improving productivity and adhesion properties. In order to satisfy this requirement, there have been proposed various methods for spreading out strands or yarns constituting the glass cloth by means of ultrasonic wave, static electricity, water, etc.

Among these spreading-out methods, the water jet needle method which uses a device disclosed in EP-A-0197502 corresponding to JP-A-61-230900 (the term "JP-A" as used herein means an "unexamined published Japanese patent application"), is excellent in terms of productivity, effect and product quality and is highly estimated on the market.

However, when a glass cloth treated by the water jet needle method is used for forming an IC substrate, the coloration is likely to become non-uniform so that when formed into an IC substrate, its appearance is poor.

The problem of non-uniform coloration is observed even when a glass cloth is immersed in a pigment dispersion which is used for coloring ordinary glass cloths, and such problem has not yet been completely solved.

In addition, the glass cloth treated by the water jet needle method is more likely to cause color unevenness and poor coloration as compared to ordinary colored glass cloths, because of differences in the permeation rate and in the amount of a pigment dispersion in the coloration step due to the degree of spreading-out and the water content of the strands or yarns. Accordingly, it is keenly demanded to overcome this problem.

GB-A-1288405 discloses a process for manufacturing a colored glass cloth wherein the glass cloth is immersed in water, then squeezed and dried slightly to a moisture content of 10 to 40%, eg 30% before being immersed in at least one pigment bath containing a pigment dispersion.

### SUMMARY OF THE INVENTION

An object of the present invention is to provide a method for efficiently manufacturing a uniformly colored glass cloth, which can prevent color unevenness and poor coloration.

The present inventors have made intensive and extensive studies in order to overcome these problems. As a result, it has been found that a glass cloth is more uniformly colored by controlling its water content, leading to the accomplishment of the present invention.

According to the present invention, there is provided a method for manufacturing a colored glass cloth, comprising the steps of immersing a water-containing glass cloth in a pigment dispersion, squeezing an excess of the pigment dispersion attached to the glass cloth from the glass cloth, and then drying it, characterized in that, before immersion in the pigment dispersion, the glass cloth is subjected to the steps of spreading out using a water jet needle and then removing some of the water from the cloth so that it has a water content of from 20 to 25% by weight.

The glass cloth according to the present invention can be applied not only to an IC substrate but to other materials which require uniform coloration.

### BRIEF DESCRIPTION OF THE DRAWINGS

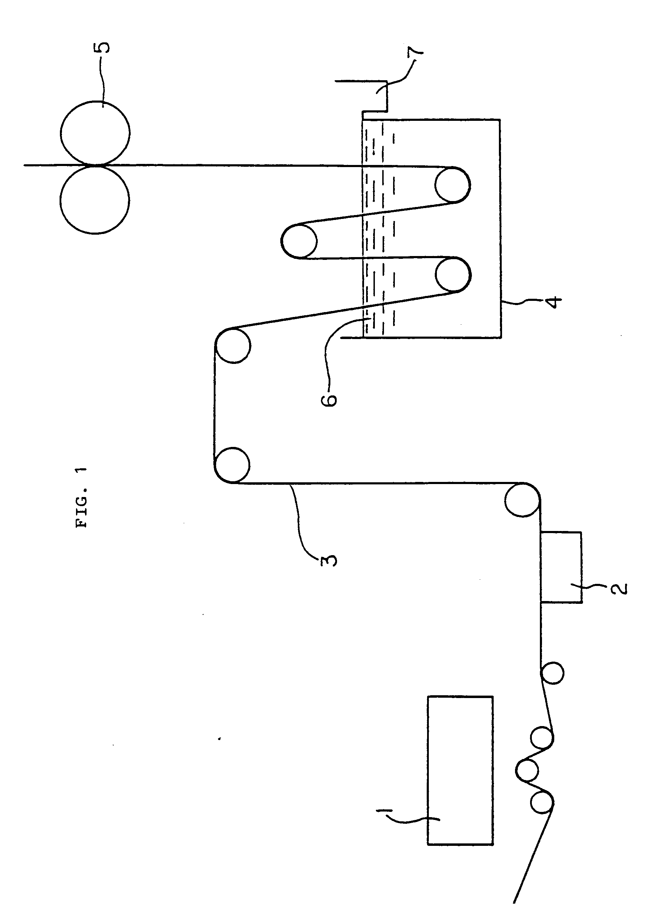

Fig. 1 is a schematic view of an embodiment of the process scheme of the present invention.

### DETAILED DESCRIPTION OF THE INVENTION

An embodiment of the present invention will now be described with reference to the accompanying drawing.

Fig. 1 is a schematic view of an embodiment of the process scheme of the present invention.

It is necessary to control the water content of a glass cloth before it is colored. As shown in Fig. 1, a glass cloth 3 which is to be subjected to a spreading-out treatment is passed through a water jet needle device 1. In this step, high-pressure water is uniformly applied to the glass cloth through a nozzle having a bore diameter of from 0.1 to 0.5 mm at a pressure of from 10 to 300 kg/cm², whereby the glass cloth takes a state such that spreading-out occurs between filaments of strands or yarns which constitute the glass cloth, namely, the strands or yarns are spread out. In this state, since the water content in the glass cloth is in the range of from 30 to 35% by weight, the glass cloth is passed over a suction device 2, whereby not only the water contained in the glass cloth is transferred and separated by air which permeates through the glass cloth to make uniform the distribution of water content, but the water content is controlled to from 20 to 25 by weight.

The glass cloth whose water content has been controlled as described above is introduced into a pigment bath 4 in which a pigment dispersion 6 is charged and impregnated therewith.

An excess of the pigment dispersion attached to the glass cloth is squeezed by means of mangle rollers 5 so as to keep the amount of the pigment dispersion attached at a predetermined value, and the glass cloth is then introduced into a dryer to continuously dry it, thereby obtaining a product.

Since a pigment dispersion of low concentration which has been squeezed by means of the mangle rollers 5, a predetermined amount of a fresh pigment dispersion is supplied to the pigment bath in order to prevent the concentration of the pigment dispersion from being lowered, thereby allowing to overflow as a waste liquor 7. The overflowed waste liquor can be reused through adjustment of its concentration. Since the glass cloth contains water, the pigment dispersion attached to the glass cloth is diluted with this water, so that the color of the glass cloth becomes pale. Therefore, in view of the water content, the concentration of the pigment contained in the pigment dispersion is made high several times that used in the conventional methods in which the dried glass cloth is colored.

When the water content of the glass cloth is adjusted at from 20 to 25% by weight, a more uniformly colored glass cloth can be obtained.

The present invention will be illustrated in more detail by the following Examples and Comparative Examples.

EXAMPLES 1 AND 2

A glass cloth ("WEA18W", produced by Nitto Boseki Co., Ltd., unit weight: 212 g/m²) was uniformly spread out using a water jet needle device with a nozzle bore diameter of 0.13 mm and a water pressure of 100 kg/cm². Subsequently, the glass cloth was fed into a suction device using a conveyor to prepare a water-containing glass cloth having a water content of 25% by weight. The water-containing glass cloth was then immersed in each of pigment dispersions having a concentration of 2 times and 4 times that of a pigment dispersion used for coloring ordinary glass cloths, respectively. After the immersion, the glass cloth was subjected to squeezing by means of mangle rollers so that the amount of the pigment dispersion attached was 32% by weight, and then dried in a dryer at 120°C to obtain a colored glass cloth. The results are shown in Table 1.

COMPARATIVE EXAMPLE 1

A colored glass cloth was obtained in the same manner as in Example 1, except that a glass cloth which had not been spread out was immersed in an ordinary pigment dispersion. The results are shown in Table 1.

COMPARATIVE EXAMPLE 2

A glass cloth was spread out under the same conditions as in Examples 1 and 2 and immediately thereafter, was immersed in the same pigment dispersion as used in Comparative Example 1, without adjusting the water content by means of the suction device, followed by treating in the same manner as in Example 1 to obtain a colored glass cloth. The results are shown in Table 1.

### Table 1

|  | Example | | Comparative Example | |
|---|---|---|---|---|
|  | 1 | 2 | 1 | 2 |
| Water content[1] (% by weight) | 25 | 25 | 0 | 32 |
| Pigment dispersion (concentration ratio[2]) | 2 | 4 | 1 | 1 |
| Degree of coloration[3] (%) | 48 | 78 | 100 | 6 |
| Color unevenness[4] | ◉ | ○ | ○ | x |

(1) The water content was calculated by the following equation:
$$\text{Water content} = [A/(A + B)] \times 100$$
wherein A means the water weight, and B means the glass cloth weight.

(2) The concentration of the pigment dispersion used in the Comparative Examples was taken as 1.

(3) The degree of coloration was evaluated in the following manner. That is, a light having a wavelength of 380 to 780 nm was applied to the glass cloth, and the intensity of a reflected light therefrom was measured using a spectrophotometer (Model U-3200, manufactured by Hitachi, Ltd.). The determination was made while taking the intensity of the reflected light before and after the coloration in Comparative Example 1 as 0 and 100, respectively.

(4) The color unevenness was visually judged by the panel of three persons under the following criterion.

◎: All persons judged that no color unevenness occurred.

o: Two persons judged that no color unevenness occurred.

x: All persons judged that color unevenness occurred.

According to the present invention, since immediately after the spreading-out treatment, the water content is controlled in the suction step, and the coloration and drying are conducted, it is possible to effect these two treatments on the same production line, thus leading to an increase of productivity and product quality.

Further, as is also clear from Table 1, the glass cloth which is colored after being impregnated with a predetermined amount of water in advance is less in color unevenness than that of Comparative Example 1 in which the glass cloth in the dry state is colored during the production of an ordinary IC cloth, and the color unevenness does not occur even when the degree of coloration is lowered. This indicates that the amount of the pigment to be used can be small, leading to an advantage from the economical viewpoint.

While the invention has been described in detail and with reference to specific embodiments thereof, it will be apparent to one skilled in the art that various changes and modifications can be made therein without departing from the scope thereof.

## Claims

1. A method for manufacturing a colored glass cloth, comprising the steps of immersing a water-containing glass cloth in a pigment dispersion, squeezing an excess of the pigment dispersion attached to the glass cloth from the glass cloth, and drying it, characterized in that, before immersion in the pigment dispersion, the glass cloth is subjected to the steps of spreading out using a water jet needle and then removing some of the water from the cloth so that it has a water content of from 20 to 25% by weight.

2. A method as claimed in claim 1, wherein the immersing step is effected in a bath (4) containing the pigment dispersion, and a predetermined amount of a fresh pigment dispersion is supplied to the bath in order to prevent the concentration of the pigment dispersion from being lowered.

**Patentansprüche**

1. Verfahren zum Herstellen eines gefärbten Glasgewebes, mit folgenden Schritten: ein wasserhaltiges Glasgewebe wird in eine Pigmentdispersion getaucht, ein Überschuß der am Glasgewebe haftenden Pigmentdispersion wird vom Glasgewebe abgepreßt und dieses getrocknet, dadurch gekennzeichnet, daß das Glasgewebe vor dem Eintauchen in die Pigmentdispersion folgenden Verfahrensschritten unterworfen wird: das Glasgewebe wird unter Verwendung einer Wasserstrahlnadel aufgeweitet, und dann wird dem Gewebe soviel Wasser entzogen, daß es einen Wassergehalt zwischen 20 und 25 Gewichtsprozent hat.

2. Verfahren nach Anspruch 1, bei dem der Eintauchschritt in ein die Pigmentdispersion enthaltendes Bad (4) erfolgt und dem Bad eine vorgegebene Menge frischer Pigmentdispersion zugegeben wird, um zu verhindern, daß die Konzentration der Pigmentdispersion absinkt.


**Revendications**

1. Un procédé de fabrication d'une natte de verre colorée, comprenant les étapes d'immersion d'une natte de verre contenant de l'eau dans une dispersion de pigment, d'élimination par compression d'un excès de la dispersion de pigment attaché à la natte de verre et de séchage de la natte de verre, caractérisé en ce que, avant l'immersion dans la dispersion de pigment, la natte de verre est soumise aux étapes d'étalement avec utilisation d'une aiguille à jet d'eau, une certaine quantité de l'eau étant ensuite enlevée de la natte, de sorte qu'elle présente une teneur en eau de l'ordre de 20 à 25% en poids.

2. Un procédé selon la revendication 1, dans lequel l'étape d'immersion est effectuée dans un bain (4) contenant la dispersion de pigment et en ce qu'une quantité prédéterminée d'une dispersion de pigment fraîche est introduite dans le bain en vue d'éviter une baisse de la concentration de la dispersion de pigment.

FIG. 1

EP 0 376 664 B1